# EUROPEAN PATENT SPECIFICATION

(11) **EP 2 393 187 B1**
(45) Date of publication and mention of the grant of the patent: **16.10.2019**
(21) Application number: 11168609.3
(22) Date of filing: 02.06.2011
(51) Int. Cl.: H02K 7/106, H02K 49/06, H02K 49/10

(54) **Electromagnetic non-contact brake**
Elektromagnetische, kontaktlose Bremse
Frein électromagnétique sans contact

(30) Priority: 02.06.2010 US 792075
(43) Date of publication of application: 07.12.2011
(73) Proprietor: The Boeing Company, Chicago, IL 60606-1596 (US)
(72) Inventor: Peck, Jim L., Huntington Beach, CA 92647-2346 (US)
(74) Representative: Howson, Richard Giles Bentham

(56) References cited:
- EP-A2- 1 811 637
- DE-A1- 3 631 672
- GB-A- 793 849
- JP-A- S60 200 760
- US-A- 2 951 956
- US-A- 6 148 967

## Description

### FIELD

The present disclosure relates to electromechanical actuators, motors and the like, and more particularly to an electromagnetic non-contact brake that may be used in conjunction with an electric motor, electromechanical actuator or similar device.

### BACKGROUND

Aircraft use electromechanical actuators or electric motors coupled to a mechanical drive for operating flight control surfaces and other devices onboard the aircraft. Examples of the flight control surfaces that may be operated or moved by electromechanical actuators may include and is not necessarily limited to ailerons, flaps, elevator, rudder, speed brakes and the like. Electromechanical actuators typically have maximum efficiency at about 75% of maximum revolutions per minute (RPM). Electromechanical actuators typically have substantially maximum torque at max current at high RPM. If an Electromechanical actuator is required to hold a high load while not in motion, then a high current is required to support holding the load. The high current required to support holding the high load can result in over heating because the high current attempts to use minimum magnetics to create maximum torque. Maximum current and minimum magnetics may also produce inadequate torque available to hold load. Electronics associated with a motor of an electromechanical actuator under such conditions may also over heat and may use excessive power and require excessive cooling. Aircraft flight control systems during cruise operation of the aircraft under some conditions may have to apply over 75% of maximum torque to hold a control surface in place for more then 70% of the flight. Such demands require increased use of electrical power to maintain the torque and cooling to prevent overheating of systems. The increased energy demands can result in higher fuel usage and inefficient operation of the aircraft.

### SUMMARY

In accordance with an embodiment, an electromagnetic non-contact brake may include an annular stator assembly including a predetermined number of poles formed about the stator assembly. A rotor assembly is disposed within the stator assembly and may include a selected number of poles formed about the rotor assembly. A shaft may extend through a center portion of the rotor assembly and be fixedly attached to the rotor assembly. An electrical connection is adapted to controllably apply electrical power to at least one of the stator assembly and the rotor assembly. The electrical power causes a plurality of magnetic fields to be simultaneously generated around at least one of the stator assembly and the rotor assembly by the poles. Each of the plurality of magnetic fields causes the poles of the stator assembly and the poles of the rotor assembly to be magnetically attracted to one another to substantially prevent the rotor assembly and the shaft from rotating.

In accordance with another embodiment, an electromechanical actuator and non-contact brake may include an electrical motor assembly including an output shaft for operating a movable part of a vehicle. An electromagnetic non-contact brake is provided for acting on the output shaft to substantially prevent the output shaft from rotating. The electromagnetic non-contact brake may include an annular stator assembly including a predetermined number of poles formed about the stator assembly and a rotor assembly disposed within the stator assembly including a selected number of poles formed about the rotor assembly. A shaft may extend through a center portion of the rotor assembly and be fixedly attached to the rotor assembly. An electrical connection is adapted to controllably apply electrical power to at least one of the stator assembly and the rotor assembly. The electrical power causes a plurality of magnetic fields to be simultaneously formed around at least one of the stator assembly and the rotor assembly by the poles of at least one of the stator assembly and the rotor assembly. Each of the plurality of magnetic fields causes the poles of the stator assembly and the poles of the rotor assembly to be magnetically attracted to one another to substantially prevent the rotor assembly and the shaft from rotating. The shaft is linked to the output shaft of the electric motor assembly to substantially prevent the output shaft from rotating.

Other aspects and features of the present disclosure, as defined solely by the claims, will become apparent to those ordinarily skilled in the art upon review of the following non-limited detailed description of the disclosure in conjunction with the accompanying figures.

US 6148967 relates to a brake mechanism includes an inner assembly secured to a motor shaft and an outer assembly surrounding the inner assembly. The outer assembly includes a permanent magnet or an electromagnet between a pair of ferromagnetic pole structures. The inner assembly also includes a pair of ferromagnetic pole structures. During operation of the brake mechanism, the inner assembly is rotated relative to the outer assembly, and the pole structures cause a magnetic field within the inner assembly to pulsate. The pulsating magnetic field causes the inner assembly to apply a braking torque to the shaft.

JP S60 200760 relates to obtain an electromagnetic brake device which has sufficient brake force and a simple construction by forming projections of ferromagnetic material at an interval along the moving direction of a driven unit, and disposing an electromagnet opposed to the projections. CONSTITUTION:Projections 3 of ferromagnetic material are formed at a suitable interval along the moving direction of a driven unit 2 such as a disc or a slide plate. An electromagnetic unit 7 disposed to form a magnetic circuit with the projections 3, a current is flowed to a coil 6 when a brake force is necessary to energize the electromagnet 7. Thus, sufficient brake force can be applied to the unit 3, and the construction of the entire electromagnetic brake device 8 can be simply formed.

GB 793849 relates to an eddy current brake, the stator has separate individually wound core members co-operating with similarly spaced teeth on the rotor. As shown, the U-shaped stator cores are wound so that adjacent polepieces are of opposite polarity and the rotor polepieces are also U-shaped and carried by a spider 67. The rotor teeth are surrounded by non-magnetic conducting metal 68.

US 2951956 relates to hétéropolar electromagnetic brake comprising a filed stator and an armature rotor, ferromagnetic cores carried by said armature rotor end portions of which form two sets of teeth at the outer periphery of said armature rotor.

DE 3631672 relates to the braking device includes a stator (3) mounted in a torsionally resistant manner on an axle (1) and designed as a claw-pole wheel with associated yoke tube (15) and claw-pole carrier (17,19) arranged on either side of the yoke tube (15). The rotor (9) is rotatably mounted via bearings (5,7) on the same axle (1) as the stator. The multi-pole iron cores (15,17,19,31) of the stator and rotor form a magnetic flux circuit together. - One of the cores (15,17,19) has remnant magnetisation properties, and its associated winding is designed as the exciter winding (25), while the other winding is the generator winding (39). A slip-ring assembly (41,43) is provided to connect the exciter winding (25) to the generator winding (39), and the current magnitude input from the generator winding (39) into the exciter winding (25) is controlled by a control device (49).

EP 1811637 relates to a motor (20) for driving a movable body includes a cylinder portion (26a) that holds a field magnet, a coil holder disposed rotatably to the cylinder portion, a conducting coil (101a, 101b) wound on the coil holder and generates a rotational force between the same and the cylinder portion (26a) when a current flows in the conducting coil (101a, 101b), a brake coil (111a, 111b) provided on the coil holder, where an electromotive force for generating magnetic field that suppresses relative rotation between the coil holder and the cylinder portion (26a) is induced between both ends of brake coil (111a, 111b) when a current flows in the conducting coil (101a, 101b), and a switch interposed between the both ends of the brake coil (111a, 111b).

The present invention is set out in the independent claims, with some optional features set out in the claims dependent thereto.

### BRIEF DESCRIPTION OF THE SEVERAL VIEWS OF THE DRAWINGS

The following detailed description of embodiments refers to the accompanying drawings, which illustrate specific embodiments of the disclosure. Other embodiments having different structures and operations do not depart from the scope of the present disclosure.
Figure 1 is a cross-sectional view of an example of an electric motor and electromagnetic non-contact brake in accordance with an embodiment of the present disclosure.
Figure 2A is a cross-sectional view of the exemplary electromagnetic non-contact brake in Figure 1 taken along lines 2-2 illustrating an aligned configuration between the pairs of stator poles and pairs of rotor poles when in a braking or locking position in accordance with an embodiment of the present disclosure.
Figure 2B is a cross-sectional view of the exemplary electromagnetic non-contact brake in Figure 1 taken along lines 2-2 illustrating a bridged configuration or daisy chain configuration between the pairs of stator poles and pairs of rotor poles when in a braking or locking position in accordance with an embodiment of the present disclosure.
Figure 3 is a cross-sectional view of an exemplary electromagnetic non-contact brake similar to the one in Figure 1 illustrating electrical wire coils or windings in association with the rotor poles in accordance with an embodiment of the present disclosure.
Figure 4 is a cross-sectional view of an exemplary electromagnetic non-contact brake similar to the one in Figure 1 illustrating electrical wire coils or windings associated with the pairs of poles of the stator assembly and the pairs of poles of the rotor assembly in accordance with an embodiment of the present disclosure.
Figure 5 is a schematic diagram of an example of electrical wire coils or windings for a stator assembly or rotor assembly and exemplary electrical connection circuit to controllably apply electrical power to the stator assembly or rotor assembly in accordance with an embodiment of the present disclosure.
Figure 6A is a side view of a portion of a stator assembly and a rotor assembly of a non-contact brake illustrating electric wire coil windings on each pole of the stator assembly in accordance with an embodiment of the present disclosure.
Figure 6B is a side view of a portion of a stator assembly and a rotor assembly of an exemplary non-contact brake illustrating electric wire coil windings on each pole of the rotor assembly in accordance with an embodiment of the present disclosure.
Figures 6C is a side view of a portion of a stator assembly and a rotor assembly of an exemplary non-contact brake illustrating electric wire coil windings on each pole of the rotor assembly and on each pole of the stator assembly in accordance with an embodiment of the present disclosure.
Figures 6D is a side view of a portion of a stator assembly and a rotor assembly of an exemplary non-contact brake illustrating electric wire coil windings wound around a conductive link between a pair of poles of the stator assembly in accordance with an embodiment of the present disclosure.
Figure 7 is a cross-sectional view of an example of an electric motor and electromagnetic brake in accordance with another embodiment of the present disclosure.
Figure 8 is a schematic diagram of an example of an electric control circuit for controlling a motor and non-contact brake in accordance with an embodiment of the present disclosure.
Figure 9 is a flow chart of an example of a method for controlling operation of the electric motor and non-contact brake in accordance with an embodiment of the present disclosure.

### DESCRIPTION

The following detailed description of embodiments refers to the accompanying drawings, which illustrate specific embodiments of the disclosure. Other embodiments having different structures and operations do not depart from the scope of the present disclosure.

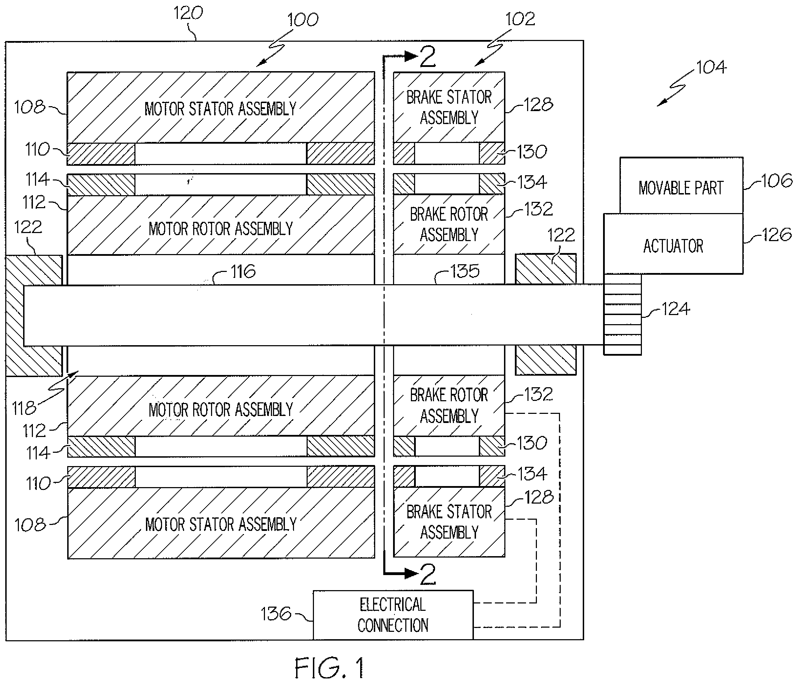

Figure 1 is a cross-sectional view of an example of an electric motor 100 and electromagnetic non-contact brake 102 in accordance with an embodiment of the present disclosure. The electric motor 100 and electromagnetic non-contact brake 102 may be components of an electromechanical actuator assembly 104 that may be used to operate or move a movable part 106 on a vehicle or other apparatus. For example, the movable part 106 may be a flight control surface of an aircraft or airplane or other movable part of the aircraft. The vehicle may also be a terrestrial vehicle, watercraft or vessel with a movable part 106, the movement of which is controlled by the electromechanical actuator assembly 104.

The electric motor 100 may be a stepper motor or other type motor capable of operating or moving the movable part 106 of the vehicle or other apparatus similar to that described herein or in any particular desired manner. The motor 100 includes a motor stator assembly 108. The motor stator assembly 108 may be substantially annularly shaped. A plurality of poles 110 may be formed about the annularly shaped motor stator assembly 108.

A motor rotor assembly 112 is disposed within the motor stator assembly 108. The rotor assembly 112 may be substantially annularly shaped and may include a plurality of poles 114 formed about the annularly shaped rotor assembly 112. The motor stator assembly 108 may have a different number of poles 110 relative to the motor rotor assembly 112, or in some designs, the stator assembly 108 and the rotor assembly 112 may have the same number of poles. The poles 110 of the stator assembly 108 may be formed by electrical wire windings about a metal pole portion to form electromagnets when a voltage is applied as is commonly known in the art. The poles 114 of the rotor assembly 112 may also be formed by electrical wire windings about metal pole portions.

The electric motor 100 may operate in a manner as is known in the art. For example, a moving magnetic field may be created in the poles 110 of the motor stator assembly 110 which steps or moves from pole 110 to pole 110 about the annularly shaped stator assembly 110 in response to electrical power being applied to the stator assembly 108. Poles 114 of the motor rotor assembly 112 are magnetically attracted by the moving magnetic field in the stator assembly 108 which causes the rotor assembly 112 to rotate in response to the moving magnetic field in the stator assembly 108.

A drive shaft or output shaft 116 may extend through a center portion 118 of the rotor assembly 112. The drive shaft 116 may be fixedly attached to the rotor assembly 112. Accordingly, as the stator assembly 108 is energized by electrical power and a magnetic field is generated which circulates around the stator assembly 108, similar to that previously described, poles or electromagnets formed on the rotor assembly 112 will be magnetically attracted by the circulating magnetic field of the stator assembly 108 causing the rotor 116 to rotate with the moving magnetic field. The output shaft 116 attached to the rotor assembly 112 will therefore rotate along with the rotor assembly 112.

The motor 100 may be enclosed in a housing 120. The output shaft 116 may be mounted or supported on supports 122 within the housing 116 as illustrated in Figure 1. The supports 122 may include or may be bearings for supporting the output or drive shaft 116 for rotation.

A gear 124 or other mechanical arrangement or linkage may be attached to the output or drive shaft 116. The gear 124 may be coupled to or connected to an actuator 126 which in turn may be attached to the movable part 106. The actuator 126 may be a gear box, worm gear or other mechanical device for coupling the output shaft 116 and gear 124 or other mechanical arrangement or linkage to the movable part 106.

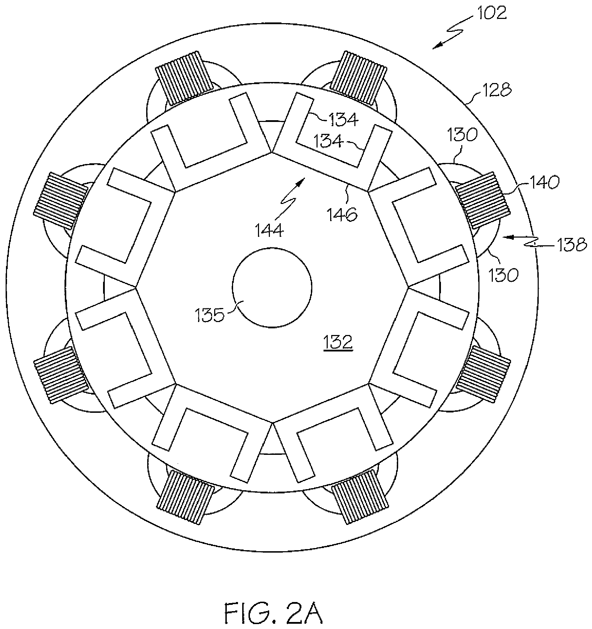

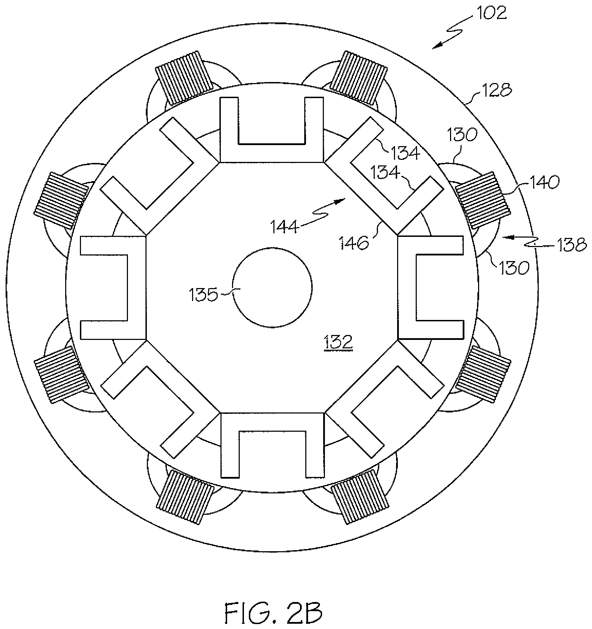

The electromagnetic non-contact brake 102 may include a brake stator assembly 128. Referring also to Figures 2A and 2B, the brake stator assembly 128 may have a substantially annular shape. The brake stator assembly 128 includes a predetermined number of poles 130 formed about the brake stator assembly 128 as best illustrated in Figures 2A and 2B.

A brake rotor assembly 132 may be disposed within the brake stator assembly 128. The brake rotor assembly 132 includes a selected number of poles 134 formed about the brake rotor assembly 132 as best illustrated in Figures 2A and 2B. The predetermined number of poles 130 of the brake stator assembly 128 and the selected number of poles 134 of the brake rotor assembly 132 may be equal the same number. The number of poles 130 of the stator assembly 128 and the number of poles 134 of the rotor assembly 132 may also be an even number.

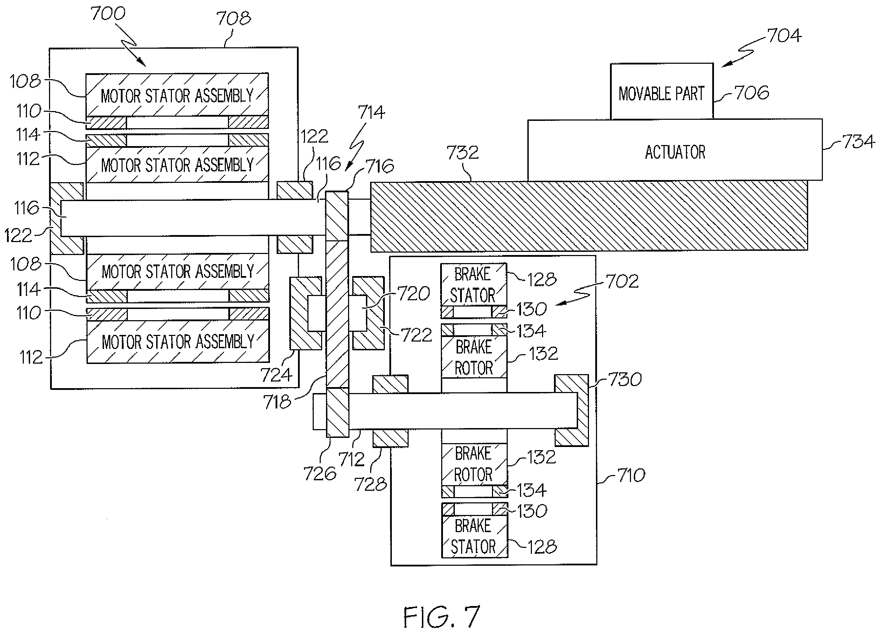

Non-contact brake 102 may include a shaft 135 extend through a center portion 136 of the brake rotor assembly 132. The shaft 135 of the non-contact brake 102 may be integrally formed with the output of drive shaft 116 of the motor 100 as illustrated in Figure 1 or the shaft 135 may be coupled to the drive shaft 116 of the motor 100 via some linkage similar to that described with reference to Figure 7. The shaft 135 is fixedly attached to the brake rotor assembly 132 to permit braking of the drive or output shaft 116 or to prevent the output shaft 116 from rotating as described in more detail herein.

An electrical connection 136 is provided and adapted to controllably apply electrical power to at least one of the brake stator assembly 128 and the brake rotor assembly 132. The electrical power causes a plurality of magnetic fields to be simultaneously generated around at least one of the brake stator assembly 128 or the brake rotor assembly 132 by the poles 130 or 134 of at least one of the stator assembly 128 or the rotor assembly 132 in response to the electrical power being applied. Each of the plurality of magnetic fields causes the poles 130 of the brake stator assembly 128 and the poles 134 of the brake rotor assembly to be magnetically attracted to one another to substantially prevent the brake rotor assembly 132 and the shaft 116 from rotating.

Referring also to Figures 2A and 2B, the predetermined number of poles 130 of the brake stator assembly 128 may be formed in pairs 138. The brake stator assembly 128 may include a plurality of electrical wire coils 140 or windings. At least one electrical wire coil 140 or winding may be associated with each pair 138 of poles 130 of the stator assembly 128. Each pair 138 of poles 130 may form an electromagnet in response to electrical power being applied to the stator assembly 128.

The pairs 138 of poles 130 may be formed by integrally forming each of the pairs 138 of poles 130 from a bar of metal material capable of forming the electromagnet when an electrical voltage and current is applied to the electrical wire coil 140. The metal bar may be formed in a substantially "U" shape similar to that illustrated in Figure 2A. Electrical wire may be wound about a central portion of the "U" shape to form the electrical wire coil 140 or wind. A strength or intensity of the magnetic field generated by each of the poles 130 will be a function of the number turns of the winding and a magnitude of the voltage and current of the electrical power applied to the stator assembly 128, as well as other factors. Each of the electrical wire coils 140 has a predetermined number of turns to generate a magnetic field with sufficient strength to prevent the shaft 116 from rotating depending upon the expected external load or torque that may be applied to the output shaft 116 by the movable part 106. For example, in the application where the movable part 106 is a flight control surface of an aircraft, the movable part 106 may be placed in a selected position by the electric motor 100 during flight in response to operation of a flight control mechanism by the pilot. As described in more detail herein, a predetermined electrical voltage and current may be applied to the electromagnetic non-contact brake 102 to hold or retain the movable part 106 in the selected position until the pilot further operates the flight control mechanism. The predetermined number of turns of each coil 140 and the voltage applied across all the coils 140 are selected so that a minimum electrical current is needed to be applied to the coils 140 to minimize heat and to provide more efficient operation of the actuator assembly 104. Depending upon the expected external load or force on the flight control surface, a predetermined voltage amplitude and current amplitude may be applied to the stator coils 140 to develop a substantially maximum torque between the stator assembly 128 and the rotor assembly 132 at zero revolutions per minute of the rotor assembly 132. In one exemplary embodiment, the stator assembly 128 and the rotor assembly 132 may be configured to provide a brake current of about 10% to about 20% of the peak drive current of the motor. The predetermined number of turns and brake current may be selected to generate a selected magnetic field strength corresponding to an expected load and desired holding requirement of the brake.

As illustrated in Figures 2A and 2B, the selected number of poles 134 of the rotor assembly 132 may also be grouped into pairs 144 of poles 134. A magnetically conductive link 146 may connect the poles 134 of each pair 144. The magnetically conductive link 146 may be formed from any material capable of carrying a magnetic flux or completing a magnetic circuit as described herein. Each pair 144 of poles 134 and the magnetically conductive link 146 of the rotor assembly 132 form a complete magnetic circuit with each electromagnet of the stator assembly 128.

Figure 2A is a cross-sectional view of the exemplary electromagnetic non-contact brake 102 in Figure 1 taken along lines 2-2 illustrating an aligned configuration between the pairs 138 of stator poles 130 and pairs 144 of rotor poles 134 when the non-contact brake 102 is in a braking or locking position to prevent the shaft 116 from rotating and to retain the movable part 106 in the selected position in accordance with an embodiment of the present disclosure.

Figure 2B is a cross-sectional view of the exemplary electromagnetic non-contact brake in Figure 1 taken along lines 2-2 illustrating a bridged configuration or daisy chain configuration between the pairs 130 of stator poles 134 and the pairs 144 of rotor poles 134 when the non-contact brake 102 is in a braking or locking position in accordance with an embodiment of the present disclosure.

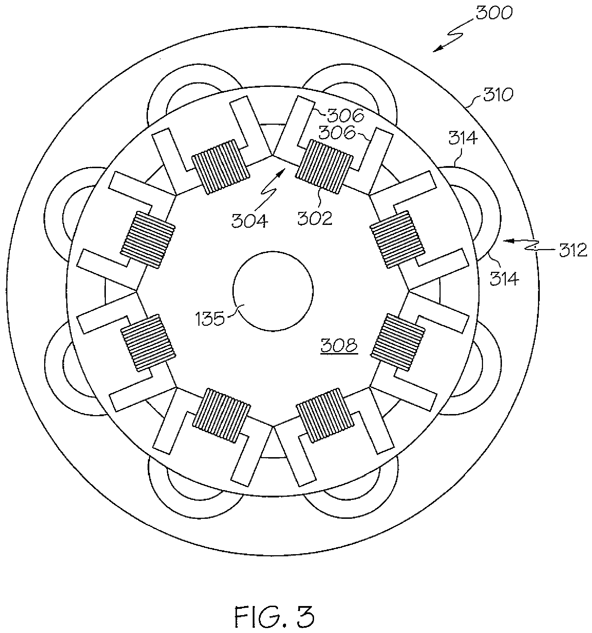

Figure 3 is a cross-sectional view of an exemplary electromagnetic non-contact brake 300 similar to the one in Figure 1 illustrating electrical wire coils 302 or windings in association with the pairs 304 of poles 306 of the rotor assembly 308 in accordance with an embodiment of the present disclosure. The stator assembly 310 includes a plurality of pairs 312 of poles 314. In the embodiment illustrated in Figure 3, no electrical wire coil or winding is associated with each of the pairs 312 of stator poles 314.

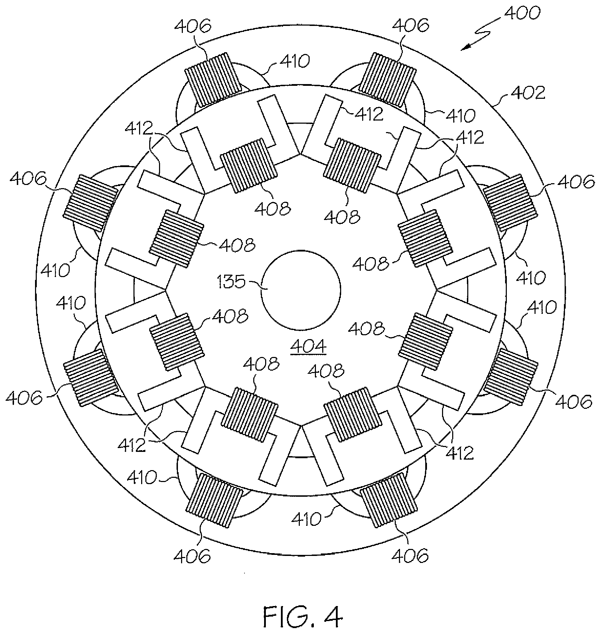

Figure 4 is a cross-sectional view of an exemplary electromagnetic non-contact brake 400 similar to the one in Figure 1 illustrating electrical wire coils or windings associated with both the pairs of poles of the stator assembly 402 and the rotor assembly 404 in accordance with an embodiment of the present disclosure. Accordingly, the electromagnetic non-contact brake 400 may include a first plurality of electrical wire coils 406 and a second plurality of electrical wire coils 408. At least one electrical wire coil 406 is associated with each pair of poles 410 of the stator assembly 402. Each pair of poles 410 of the stator assembly 402 forms an electromagnet in response to electrical power or an electrical voltage and current being applied to the stator assembly 402.

At least one electrical wire coil 408 of the second plurality of electrical wire coils 408 is associated with each pair of poles 412 of the rotor assembly 404. Each pair of poles 412 of the rotor assembly 404 forms an electromagnet in response to electrical power being applied to the rotor assembly 404. Accordingly, each of the pairs of poles 410 of the stator assembly 402 may have an electrical wire coil 406 or winding wound around a central portion of each integrally formed pair of stator poles 410. Similarly, each pair of poles 412 of the rotor assembly 404 may have an electrical wire coil 408 or winding wound around a central portion of each integrally formed pair of rotor poles 412.

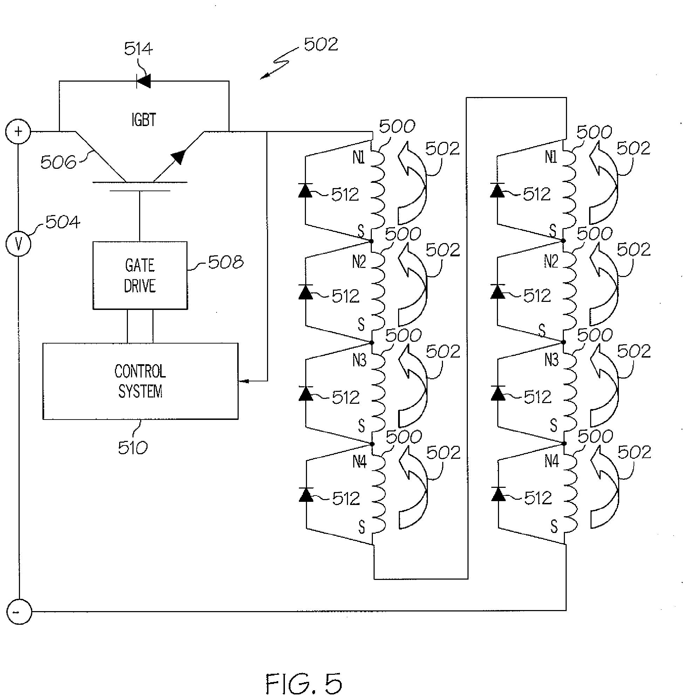

Figure 5 is a schematic diagram of an example of electrical wire coils 500 or windings for either a stator assembly or rotor assembly and exemplary electrical connection circuit 502 to controllably apply electrical power to the stator assembly or rotor assembly in accordance with an embodiment of the present disclosure. The coils 500 may represent the coils associate with either the stator assemblies or rotor assemblies illustrated in Figures 2-4. The electrical wire coils 500 or winding for each of the poles of either a stator assembly or rotor assembly may be connected in series, series parallel or parallel depending on bake performance requirements. The series configuration will have the lowest current requirement. The series connected configuration of the coils 500 in addition to each coil 500 having a predetermined number (substantially high number of turns) allows the generation or development of magnetic fields 502 of a certain strength or intensity with a low current flowing through the coils 500 in response to a voltage source 504 being connected to the series connected coils 500 by the electrical connection circuit 502. The brake current may be less than about 20% of the motor maximum drive current. This allows lower thermal loading and lower power consumption of the system while holding rotation still.

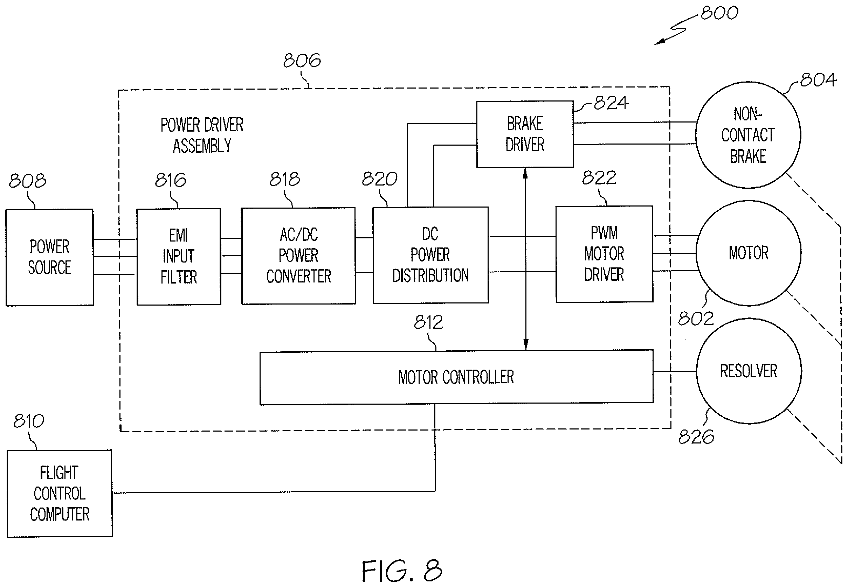

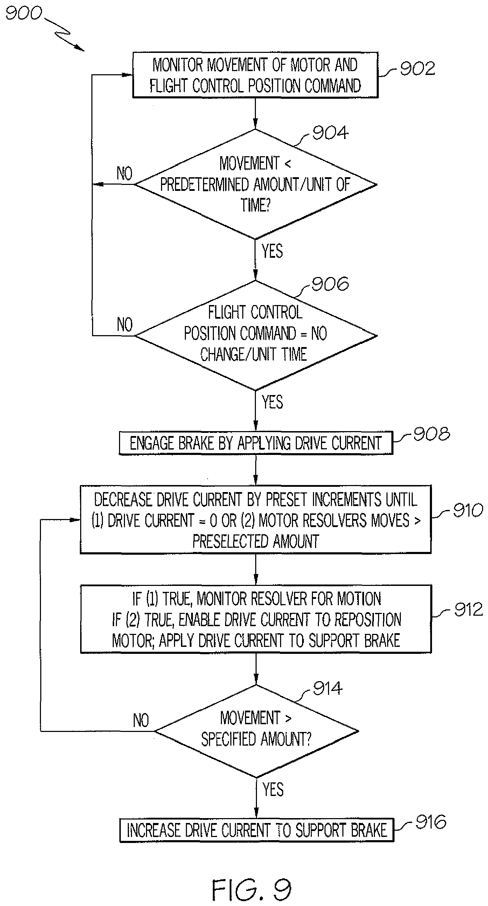

The voltage source 504 of a chosen voltage may be selectively connected to the series connected coils 500 by the electrical connection circuit 502. The electrical connection circuit 502 may include an insulated gate bipolar transistor (IGBT) 506 connected in series between the voltage source 504 and a first coil 500 of the series connected coils 500. A gate drive 508 is connected to the gate of the IGBT 506 and a control system 510 may be connected to the gate drive 508 to control operation of the IGBT to connect and disconnect the voltage source 504 from the coils 500. Accordingly, the voltage source 504 may be connected to the coils 500 to energize the coils and generate the magnetic fields 502 of the stator assembly or rotor assembly or both to cause the non-contact brake, such as brake 102 in Figure 1 to operate to prevent the shaft 116 from rotating. An example of a control system that may be used for control system 510 will be described with reference to Figure 8 and a flow chart of an example of logic or a method for controlling operation of a non-contact brake will be described with reference to Figure 9.

A diode 512 may be connected in parallel across each coil 500 to permit discharge of the coils 500 after activation. Another diode 514 may also be connected across the emitter and collector of the IGBT 506 to protect the IGBT 506 during discharge of the charged coils 500.

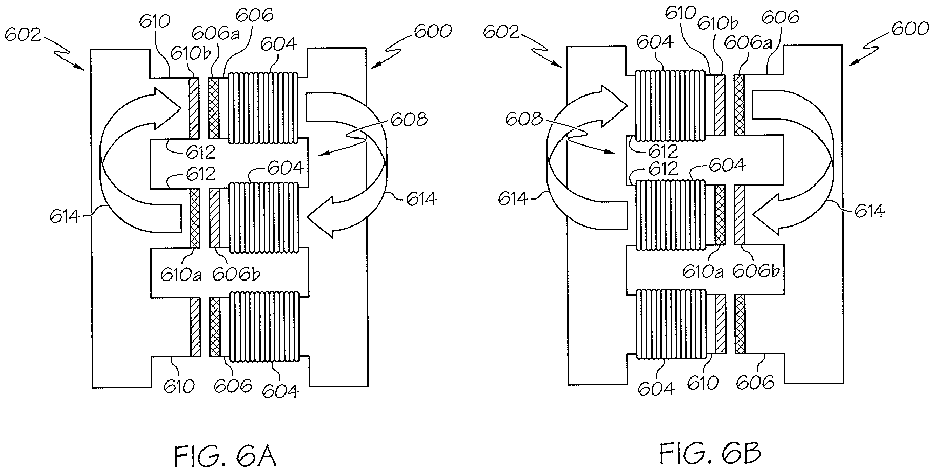

Figure 6A-6D are each a side view of a portion of a stator assembly 600 and a rotor assembly 602 of an exemplary non-contact brake illustrating different possible stator and rotor configurations of electric wire coil windings 604 in accordance with different embodiments of the present disclosure. Any of the different stator and rotor winding configurations or any other possible configurations to accomplish the functions described herein may be used for the stator assemblies and rotor assemblies illustrated in Figures 2-4.

The stator assembly 600 and the rotor assembly 602 in each of Figures 6A-6D would be annular similar to that illustrated in Figures 2-4 but are illustrated in a planar representation in Figures 6A-6D for purposes of explanation.

Figure 6A is a side view of a portion of a stator assembly 600 and a rotor assembly 602 of an exemplary non-contact brake illustrating electric wire coil windings 604 on each pole of the stator 600 in accordance with an embodiment of the present disclosure. As illustrated in Figure 6A, the stator assembly 600 may include a plurality of projections that each defines a pole 606 of the stator assembly 600. An electrical wire coil 604 or winding may be wound around each of the poles 606 of the stator assembly 600. An electromagnet 608 is formed by each pair of poles 606 of the stator assembly 600 in response to electrical power being applied to the series connected coils 604. One pole 606 of each pair of poles will define a magnetic south pole 606a and the other pole of each pair of poles will define a magnetic north pole 606b.

The rotor assembly 602 may include a plurality of projections that each defines a pole 610. Similar to that previously discussed, the poles 610 of the rotor assembly 602 may be grouped into pairs 612. One pole 610 of each pair 612 of poles 610 will define a magnetic south pole 610a and the other pole 610 of each pair 612 of poles 610 will define a magnetic north pole 610b. Each pair 612 of poles 610 may complete a magnetic circuit, as illustrated by magnetic flux flow arrows 614, with each electromagnet 608 of the stator assembly 600 to brake or lock the rotor assembly 602 in position when electrical power or a predetermined electrical voltage and current are applied to the series connected coils 604. Each magnetic north pole 606a of the stator assembly 600 will be attracted to one of the magnetic south poles 610b of the rotor assembly 602 and each magnetic south pole 606b of the stator assembly 600 will be attracted to one of the magnetic north poles 610a of the rotor assembly 602 when the electrical power is applied to the coils 604 of the stator assembly 600.

As previously discussed, each of the coils 604 may have a predetermined number of turns to provide a certain magnetic field strength to brake or hold the rotor 602 in position with a minimal or substantially low current flowing through the series connected coils 604 or windings depending upon the load or hold requirement of the brake.

Figure 6B is a side view of a portion of a stator assembly 600 and a rotor assembly 602 of an exemplary non-contact brake illustrating electric wire coil windings 604 on each pole of the rotor 602 in accordance with an embodiment of the present disclosure. Figure 6B is similar to Figure 6A except the coil windings 604 are on the poles 610 of the rotor 602 to form electromagnets 608.

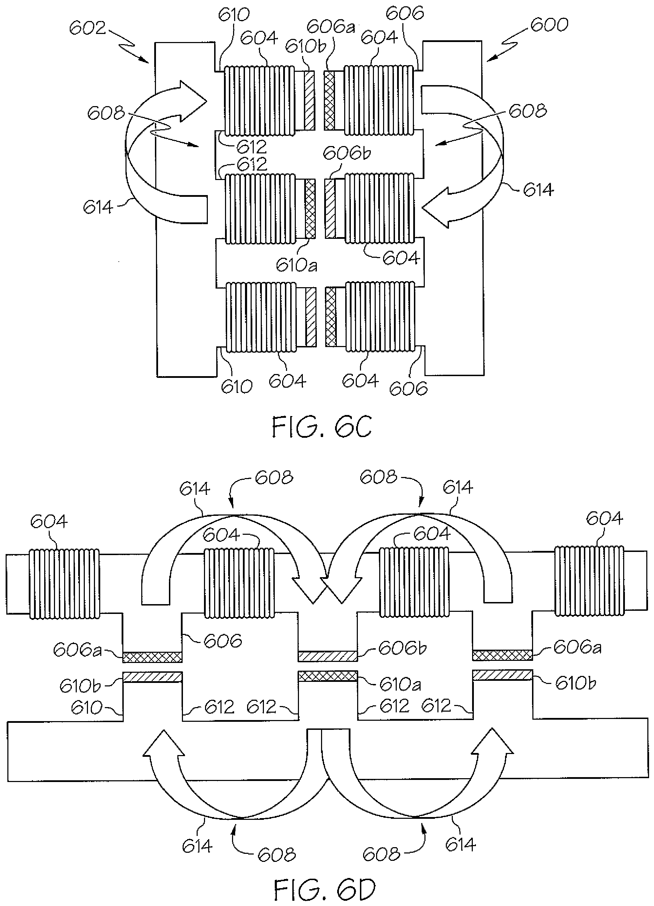

Figures 6C is a side view of a portion of a stator assembly 600 and a rotor assembly 602 of an exemplary non-contact brake illustrating electric wire coil windings 604 on each pole 606 of the stator 600 and each pole 610 of the rotor 602 in accordance with an embodiment of the present disclosure.

Figures 6D is a side view of a portion of a stator assembly 600 and a rotor assembly 602 of an exemplary non-contact brake illustrating electric wire coil windings 604 around a conductive link 616 between a pair of poles 606 of the stator 600 in accordance with an embodiment of the present disclosure.

Figure 7 is a cross-sectional view of an example of an electric motor 700 and an electromagnetic non-contact brake 702 in accordance with another embodiment of the present disclosure. The electric motor 700 may be similar to the electric motor 100 of Figure 1 and may include similar components. The non-contact brake 702 may be similar to the non-contact brake 102 of Figure 1 and may include similar components. The electric motor 700 and non-contact brake 702 may be components of an actuator assembly 704 for controlling movement or positioning of a movable part 706. The movable part 706 may be similar to the movable part 106 in Figure 1. Accordingly, the movable part 706 may be a flight control surface or other movable part of an aircraft. The movable part 706 may also be a movable part on another type of vehicle or other mechanical apparatus.

The electric motor 700 may be enclosed in a housing 708 and the non-contact brake 602 may be enclosed in a separate housing 710. The drive shaft or output shaft 116 of the motor 700 may be coupled or linked to a shaft 712 of the non-contact brake 702 by a mechanical linkage 714. The mechanical linkage 714 may be any sort of coupling arrangement to mechanically couple the drive or output shaft 116 of the motor 700 to the shaft 712 of the non-contact brake 702. A mechanical linkage 714 illustrated in Figure 7 includes a series of gears although the disclosure in not intended to be limited by the specific arrangement illustrated. The mechanical linkage 714 may include a first gear 716 attached to the shaft 116 of the motor. The first gear 716 may mesh with a second gear 718. The second gear 718 may rotate on a shaft 720 supported by supports 722 and 724. The second gear 718 may mesh with a third gear 726 attached to the shaft 712 of the non-contact brake 702. The shaft 712 is fixedly attached to the rotor assembly 134 of the brake 702. The shaft 712 of the non-contact brake 702 may be supported in supports 728 and 730.

The output shaft 116 of the motor 700 may drive a gear 732 or other apparatus. The gear 732 may in turn drive an actuator 734 that is linked to the movable part 706.

Figure 8 is a schematic diagram of an example of an electric control circuit 800 for controlling a motor 802 and non-contact brake 804 in accordance with an embodiment of the present disclosure. The motor 802 may be similar to the motor 100 or 700 described with reference to Figures 1 and 7 and the non-contact brake 804 may be similar to the non-contact brake 102 and 702 in Figures 1 and 7.

The control circuit 800 may include a power driver assembly 806. The power driver assembly 806 is adapted to receive electrical power from a power source 808 and to apply the appropriate electrical power to the motor 802 for operation of motor 802 and to also supply the appropriate electrical power to the non-contact brake 804 for operation of the non-contact brake 804 as described herein.

A flight control computer 810 or other control mechanism may send a control signal to a motor controller 812 in response a pilot operating flight controls of the aircraft or operation of other devices. The motor controller 812 receives signals from the computer 810 and may provide the appropriate interface signals for controlling operation of the power driver assembly 806 and thereby supply electrical power to the motor 802 and non-contact brake 804.

The power driver assembly 806 may include an filter 816 for receiving electrical power from the power source 808. The filter 816 may be an electromagnetic interference (EMI) filter to remove any electromagnetic interference that may be on the power line from the power source 808. The power source 808 may be a three phase power source to supply three phase electrical power to the power driver assembly 806. The filter 816 may filter or condition the electrical power for use by an alternating current to direct current (AC/DC) converter 818.

A direct current (DC) power distribution module 820 receives DC power from the AC/DC power converter 818. The DC module 820 supplies the electrical power to a pulse-width modulation (PWM) motor driver 822. The PWM motor driver 822 is electrically connected to the motor 802.

The DC power distribution module 820 is also connected to the non-contact brake 804 via a brake driver module 824. The brake driver module 824 controls the level of power supplied to the non-contact brake 804. The motor controller 812 may be connected to the brake driver module 824 for controlling operation of the brake driver module 824 and the supply of power to the non-contact brake 804.

A resolver 826 may be provided detect movement of the motor 802 or the drive or output shaft of the motor 802. The motor controller 812 may be connected to resolver 826 for receiving signals corresponding to any movement of the motor 802 or drive shaft. As described in more detail with respect to Figure 9 drive current to the non-contact brake may be controlled based on any sensed movement of the motor 802 or motor drive shaft.

Figure 9 is a flow chart of an example of a method 900 for controlling operation of the electric motor and non-contact brake in accordance with an embodiment of the present disclosure. The method 900 may be embodied in the control circuit 800 of Figure 8. Specifically, the method 900 or portions of the method 900 may be embodied in the motor controller 812 of Figure 8. Method 900 or portions of the method 900 may also be embodied in the brake drive 814.

In block 902, movement of the motor and any flight control position commands may be monitored. As previously discussed movement of the motor may be monitored by a resolver, such as resolver 830 in Figure 8 or other monitoring or movement detection device.

In block 904, a determination may be made whether any movement of the motor or flight control position command is less than a predetermined amount per a preset unit of time. If the movement of the motor or flight control position command is less than the predetermined amount per the preset unit of time, the method 900 may return to block 902 and the movement of the motor and flight control position command will continued to be monitored.

In the movement of the motor and the flight control position command is less than the predetermined amount per unit of time, the method 900 may advance to block 906. In block 906, a determination may be made if the flight control position command substantially equals no change per preset unit of time. If the flight control position command does not equal no change per present unit of time, the method 900 will return to block 902 and the method 900 will continue as previously discussed.

If the flight control position command does equal no change per present unit of time, the method 900 may advance to block 908. In block 908, the non-contact brake may be engaged by applying a predetermined amplitude of drive of current.

In block 910, the amplitude of the drive current may be decreased by preset increments until either (1) the drive current equals zero or (2) the motor resolver detects movement or rotation of the motor greater than a preselected amount or degrees of rotation.

In block 912, if the drive current equals zero, the resolver is monitored for motion or rotation of the motor. If the motor resolver movers more than the preselected amount, the drive current is enables, turned on, or applied to the motor to reposition the motor and the non-contact brake drive current is applied or turned on to support the brake in preventing the motor or drive shaft of the motor from rotating similar to that described herein.

In block 914, a determination may be made if movement of the motor or the flight control position command is greater than a pre-specified amount or degree of rotation. If the movement is not greater than the specified amount the method 900 may return to block 910. If the amount of movement is greater than the specified amount, the drive current is increased to support the brake.

In at least one embodiment of the non-contact brake described herein allow an electromechanical actuator (EMA) to hold high torques with low currents. Using low currents decreases the power required to hold the torque, lowers the heat generated by the EMA/Power Driver System and decreases the fuel required to support the flight control system. In one example, the motor drive coil relative to the brake coil may be based on a 100 ampere drive system. In this example, the maximum motor drive current may be about 100 amperes clamped by a power drive assembly, such the power drive assembly 806 described with reference to Figure 8. The motor drive coil resistance may be less that about one ohm DC. The motor drive AC impedance when the motor is operating above about 1500 revolutions per minute (RPM) may be about 2.5 ohms (250 volts, 100 amps or 25 kilowatts).

For this example, the bake current may be about 10 amperes. The brake DC resistance may be about 5 ohms. The brake drive voltage about 50 volts and the brake watts about 500 watts. This assumes 8 coils similar to that illustrated in Figures 2A and 2B with about 0.6 ohms per coil in series.

While the exemplary embodiments have been described herein in relation to a non-contact brake for use with an electromechanical actuator that may be used on a aircraft or other type vehicle, those skilled in the art will recognize that the non-contact brake may be easily adapted to other applications, such as for example to provide a brake for any type of machinery or mechanism.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Although specific embodiments have been illustrated and described herein, those of ordinary skill in the art appreciate that any arrangement which is calculated to achieve the same purpose may be substituted for the specific embodiments shown and that the embodiments herein have other applications in other environments. This application is intended to cover any adaptations or variations of the present disclosure. The following claims are in no way intended to limit the scope of the disclosure to the specific embodiments described herein.

## Claims

1. An assembly comprising an electromagnetic non-contact brake (102), a shaft (116, 135) coupled to a flight control surface (106) of an aircraft, and an electromagnetic actuator (104); in which:
the electromagnetic non-contact brake comprises an annular stator assembly (128) including a predetermined number of poles (130) formed about the stator assembly (128); and a rotor assembly (132) disposed within the stator assembly including a selected number of poles (134) formed about the rotor assembly;
the shaft (116) is arranged to extend through a center portion of the rotor assembly and be fixedly attached to the rotor assembly; and in which
an electrical connection is adapted to controllably apply electrical power to at least one of the stator assembly and the rotor assembly to cause a plurality of magnetic fields to be simultaneously generated around at least one of the stator assembly and the rotor assembly by the poles of at least one of the stator assembly and the rotor assembly in response to the electrical power being applied, wherein each of the plurality of magnetic fields causes the poles of the stator assembly and the poles of the rotor assembly to be magnetically attracted to one another to substantially prevent the rotor assembly and the shaft from rotating; wherein an electric motor (100) of the electromechanical actuator assembly (104) is configured to place the flight control surface (106) of the aircraft in a selected position during flight in response to operation of a flight control mechanism by a pilot,
in which a predetermined electrical voltage and current is applied to the electromagnetic non-contact brake (102) to hold or retain the flight control surface (106) in the selected position until the pilot further operates the flight control mechanism.

2. The assembly of claim 1, further comprising:
a plurality of electrical wire coils (140), and the predetermined number of poles of the stator assembly being formed in pairs, at least one electrical wire coil being associated with each pair of poles of the stator assembly, and each pair of poles forming an electromagnet in response to electrical power being applied to the stator assembly; and
wherein the selected number of poles of the rotor assembly are grouped in pairs, a magnetically conductive link connecting the poles of each pair, each pair of poles and magnetically conductive link of the rotor assembly forming a complete magnetic circuit with each electromagnet of the stator assembly.

3. The assembly of claim 1, further comprising:
a plurality of electrical wire coils, and the selected number of poles of the rotor assembly being formed in pairs, at least one electrical wire coil being associated with each pair of poles of the rotor assembly, and each pair of poles forming an electromagnet in response to electrical power being applied to the rotor assembly; and
wherein the predetermined number of poles of the stator assembly are grouped in pairs, a magnetically conductive link connecting the poles of each pair, each pair of poles and magnetically conductive link of the stator assembly forming a complete magnetic circuit with each electromagnet of the rotor assembly.

4. The assembly of claim 1, further comprising:
a first plurality of electrical wire coils, and the predetermined number of poles of the stator assembly being formed in pairs, at least one electrical wire coil of the first plurality of electrical wire coils being associated with each pair of poles of the stator assembly, and each pair of poles forming an electromagnet in response to electrical power being applied to the stator assembly; and
a second plurality of electrical wire coils, and the selected number of poles of the rotor assembly being formed in pairs, at least one electrical wire coil of the second plurality of electrical wire coils being associated with each pair of poles of the rotor assembly, and each pair of poles forming an electromagnet in response to electrical power being applied to the rotor assembly.

5. The assembly of claim 1, wherein the shaft of the electromagnetic non-contact brake is coupleable to an output shaft (116) of a motor (700) to permit braking of the output shaft of the motor and to prevent the output shaft from rotating output and wherein a shaft (135) of the electromagnetic non-contact brake is coupled to the flight control surface by the output shaft of the motor.

6. The assembly of claim 1, wherein the predetermined number of poles of the stator assembly and the selected number of poles of the rotor assembly equal the same number of poles.

7. The assembly of claim 1, further comprising a plurality of electrical wire coils, an electrical wire coil associated with each pole of at least one of the stator assembly and the rotor assembly.

8. The assembly of claim 7, wherein each of the electrical wire coils comprises a predetermined number of turns to generate a selected magnetic field strength corresponding to a load and holding requirement of the brake.

9. The assembly of claim 1, in which the shaft is linked to the output shaft of the electric motor assembly to substantially prevent the output shaft (116) from rotating.

10. The assembly of claim 1, further comprising a shaft (135) of the non-contact brake integrally formed with the output shaft of the motor.

11. The assembly of claim 1, further comprising a shaft (135) of the non-contact brake coupled to the output shaft of the motor by a mechanical linkage.

12. The assembly of claim 1, wherein the motor and the non-contact brake are contained in the same housing.

13. A method for braking a motor (700), comprising:
applying electrical power to at least one of an annular shaped stator (128) assembly and a rotor assembly (132) disposed within the stator assembly, wherein the stator assembly comprises a predetermined number of poles (130) formed about the stator assembly and the rotor assembly includes a selected number of poles (134) formed about the rotor assembly; in which a shaft (116, 135), coupled to a flight control surface (106) of an aircraft, is arranged to extend through a center portion of the rotor assembly and be fixedly attached to the rotor assembly; and
simultaneously generating a plurality of magnetic fields around at least one of the stator assembly and the rotor assembly by the poles of at least one of the stator assembly and the rotor assembly in response to applying the electrical power, wherein each of the plurality of magnetic fields causes the poles of the stator assembly and the poles of the rotor assembly to be magnetically attracted to one another to substantially prevent the rotor assembly from rotating, the rotor assembly being mechanically coupled to an output shaft of the motor to substantially prevent the output shaft from rotating; and
wherein an electric motor (100) of the electromechanical actuator assembly (104) places the flight control surface (106) of the aircraft in a selected position during flight in response to operation of a flight control mechanism by a pilot,
in which a predetermined electrical voltage and current is applied to the electromagnetic non-contact brake (102) to hold or retain the flight control surface (106) in the selected position until the pilot further operates the flight control mechanism.

14. The method of claim 13, wherein applying the electrical power comprises applying a predetermined voltage and current to develop a substantially maximum torque between the stator assembly and the rotor assembly at zero revolutions per minute of the rotor assembly.

15. The method of claim 13, wherein applying the electrical power comprises applying a brake current that is about 10% to about 20% of a peak drive current of the motor.

16. The method of claim 13, further comprising:
forming a plurality of electromagnets to generate the plurality of magnetic fields, the plurality of electromagnets being formed by the predetermined number of poles of the rotor assembly being grouped in pairs, at least one electrical wire coil of a plurality of electrical wire coils being associated with each pair of poles of the rotor assembly, and each pair of poles forming one of the plurality of electromagnets; and
wherein the selected number of poles of the stator assembly are grouped in pairs, a magnetically conductive link connecting the poles of each pair, each pair of poles and magnetically conductive link of the stator assembly forming a complete magnetic circuit with each electromagnet of the rotor assembly.

## Patentansprüche

1. Anordnung, die eine elektromagnetische berührungslose Bremse (102), eine Welle (116, 135), die mit einer Flugsteuerfläche (106) eines Flugzeugs verbunden ist, und einen elektromagnetischen Aktuator (104) aufweist; wobei:
die elektromagnetische kontaktlose Bremse eine ringförmige Statoranordnung (128) aufweist, die eine vorbestimmten Anzahl von Polen (130) enthält, die um die Statoranordnung (128) herum ausgebildet sind; und eine Rotoranordnung (132), die in der Statoranordnung angeordnet ist und eine ausgewählte Anzahl von Polen (134) enthält, die um die Rotoranordnung herum ausgebildet sind;
die Welle (116) angeordnet ist, um sich durch einen zentralen Abschnitt der Rotoranordnung zu erstrecken und fest an der Rotoranordnung angebracht zu sein; und wobei
eine elektrische Verbindung ausgelegt ist, um steuerbar elektrische Energie an die Statoranordnung und/oder die Rotoranordnung anzulegen, um zu bewirken, dass eine Vielzahl von Magnetfeldern gleichzeitig um die Statoranordnung und/oder die Rotoranordnung durch die Pole der Statoranordnung und/oder der Rotoranordnung in Ansprechen auf die angelegte elektrische Energie erzeugt werden, wobei jedes der Vielzahl von Magnetfeldern bewirkt, dass die Pole der Statoranordnung und die Pole der Rotoranordnung magnetisch zueinander angezogen werden, um im Wesentlichen zu verhindern, dass sich die Rotoranordnung und die Welle drehen; wobei ein Elektromotor (100) der elektromechanischen Aktuatoranordnung (104) ausgestaltet ist, um in Ansprechen auf die Betätigung eines Flugsteuerungsmechanismus durch einen Piloten die Flugsteuerfläche (106) des Flugzeugs während des Flugs in einer ausgewählten Position zu positionieren,
wobei eine vorbestimmte elektrische Spannung und ein vorbestimmter elektrischer Strom an die elektromagnetische berührungslose Bremse (102) angelegt werden, um die Flugsteuerfläche (106) in der ausgewählten Position zu halten oder beizubehalten, bis der Pilot den Flugsteuerungsmechanismus weiter betätigt.

2. Anordnung nach Anspruch 1, ferner aufweisend:
eine Vielzahl von elektrischen Drahtspulen (140) und die vorbestimmte Anzahl von Polen der Statoranordnung, die paarweise ausgebildet sind, wobei jedem Paar von Polen der Statoranordnung mindestens eine elektrische Drahtspule zugeordnet ist und jedes Paar von Polen einen Elektromagneten in Ansprechen auf elektrische Energie, die an die Statoranordnung angelegt wird, ausbildet; und
wobei die ausgewählte Anzahl von Polen der Rotoranordnung paarweise gruppiert ist, eine magnetisch leitende Verbindung die Pole jedes Paares verbindet und jedes Paar von Polen und eine magnetisch leitende Verbindung der Rotoranordnung mit jedem Elektromagneten der Statoranordnung einen vollständigen Magnetkreis ausbilden.

3. Anordnung nach Anspruch 1, ferner aufweisend:
eine Vielzahl von elektrischen Drahtspulen und die ausgewählte Anzahl von Polen der Rotoranordnung, die paarweise ausgebildet sind, wobei jedem Paar von Polen der Rotoranordnung mindestens eine elektrische Drahtspule zugeordnet ist und jedes Paar von Polen in Ansprechen auf elektrische Energie, die an die Rotoranordnung angelegt wird, einen Elektromagneten ausbildet; und
wobei die vorbestimmte Anzahl von Polen der Statoranordnung paarweise gruppiert ist, eine magnetisch leitende Verbindung die Pole jedes Paares verbindet und jedes Paar von Polen und die magnetisch leitende Verbindung der Statoranordnung mit jedem Elektromagneten der Rotoranordnung einen vollständigen Magnetkreis ausbilden.

4. Anordnung nach Anspruch 1, ferner aufweisend:
eine erste Vielzahl von elektrischen Drahtspulen und die vorbestimmte Anzahl von Polen der Statoranordnung, die paarweise ausgebildet sind, wobei jedem Paar von Polen der Statoranordnung mindestens eine elektrische Drahtspule der ersten Vielzahl von elektrischen Drahtspulen zugeordnet ist und jedes Paar von Polen einen Elektromagneten in Ansprechen auf elektrische Energie, die an die Statoranordnung angelegt wird, ausbildet; und
eine zweite Vielzahl von elektrischen Drahtspulen und die ausgewählte Anzahl von Polen der Rotoranordnung, die paarweise ausgebildet sind, wobei jedem Paar von Polen der Rotoranordnung mindestens eine elektrische Drahtspule der zweiten Vielzahl von elektrischen Drahtspulen zugeordnet ist und jedes Paar von Polen einen Elektromagneten in Ansprechen auf elektrische Energie, die an die Rotoranordnung angelegt wird, ausbildet.

5. Anordnung nach Anspruch 1, wobei die Welle der elektromagnetischen berührungslosen Bremse mit einer Abtriebswelle (116) eines Motors (700) verbunden werden kann, um ein Bremsen der Abtriebswelle des Motors zu ermöglichen und die Abtriebswelle am rotierenden Abtrieb zu hindern, und wobei eine Welle (135) der elektromagnetischen berührungslosen Bremse durch die Abtriebswelle des Motors mit der Flugsteuerfläche verbunden ist.

6. Anordnung nach Anspruch 1, wobei die vorbestimmte Anzahl von Polen der Statoranordnung und die ausgewählte Anzahl von Polen der Rotoranordnung gleich der gleichen Anzahl von Polen ist.

7. Anordnung nach Anspruch 1, ferner aufweisend eine Vielzahl von elektrischen Drahtspulen, wobei jedem Pol der Statoranordnung und/oder der Rotoranordnung eine elektrische Drahtspule zugeordnet ist.

8. Anordnung nach Anspruch 7, wobei jede der elektrischen Drahtspulen eine vorbestimmte Anzahl von Windungen aufweist, um eine ausgewählte Magnetfeldstärke zu erzeugen, die einer Last- und Halteanforderung der Bremse entspricht.

9. Anordnung nach Anspruch 1, wobei die Welle mit der Abtriebswelle der Elektromotoranordnung verbunden ist, um im Wesentlichen zu verhindern, dass sich die Abtriebswelle (116) dreht.

10. Anordnung nach Anspruch 1, ferner aufweisend eine Welle (135) der berührungslosen Bremse, die einstückig mit der Abtriebswelle des Motors ausgebildet ist.

11. Anordnung nach Anspruch 1, ferner aufweisend eine Welle (135) der berührungslosen Bremse, die durch eine mechanische Verbindung mit der Abtriebswelle des Motors verbunden ist.

12. Anordnung nach Anspruch 1, wobei der Motor und die berührungslose Bremse in demselben Gehäuse untergebracht sind.

13. Verfahren zum Bremsen eines Motors (700), aufweisend:
Anlegen elektrischer Energie an eine ringförmige Statoranordnung (128) und/oder eine innerhalb der Statoranordnung angeordnete Rotoranordnung (132), wobei die Statoranordnung eine vorbestimmte Anzahl von Polen (130) aufweist, die um die Statoranordnung herum ausgebildet sind, und die Rotoranordnung eine ausgewählte Anzahl von Polen (134) enthält, die um die Rotoranordnung herum ausgebildet sind; wobei eine Welle (116, 135), die mit einer Flugsteuerfläche (106) eines Flugzeugs verbunden ist, angeordnet ist, um sich durch einen zentralen Abschnitt der Rotoranordnung zu erstrecken und fest an der Rotoranordnung angebracht zu sein; und
gleichzeitiges Erzeugen einer Vielzahl von Magnetfeldern um die Statoranordnung und/oder die Rotoranordnung durch die Pole der Statoranordnung und/oder der Rotoranordnung in Ansprechen auf das Anlegen der elektrischen Energie, wobei jedes der Vielzahl von Magnetfeldern bewirkt, dass die Pole der Statoranordnung und die Pole der Rotoranordnung magnetisch voneinander angezogen werden, um im Wesentlichen zu verhindern, dass sich die Rotoranordnung dreht, wobei die Rotoranordnung mechanisch mit einer Abtriebswelle des Motors verbunden ist, um im Wesentlichen zu verhindern, dass sich die Abtriebswelle dreht; und
wobei ein Elektromotor (100) der elektromechanischen Aktuatoranordnung (104) die Flugsteuerfläche (106) des Flugzeugs in Ansprechen auf die Betätigung eines Flugsteuerungsmechanismus durch einen Piloten während des Flugs in eine ausgewählte Position positioniert,
wobei eine vorbestimmte elektrische Spannung und ein vorbestimmter elektrischer Strom an die elektromagnetische berührungslose Bremse (102) angelegt werden, um die Flugsteuerfläche (106) in der ausgewählten Position zu halten oder beizubehalten, bis der Pilot den Flugsteuerungsmechanismus weiter betätigt.

14. Verfahren nach Anspruch 13, wobei das Anlegen der elektrischen Energie das Anlegen einer vorbestimmten Spannung und eines vorbestimmten Stroms aufweist, um ein im Wesentlichen maximales Drehmoment zwischen der Statoranordnung und der Rotoranordnung bei null Umdrehungen pro Minute der Rotoranordnung zu entwickeln.

15. Verfahren nach Anspruch 13, wobei das Anlegen der elektrischen Energie das Anlegen eines Bremsstroms aufweist, der etwa 10 % bis etwa 20 % eines Spitzenantriebsstroms des Motors beträgt.

16. Verfahren nach Anspruch 13, ferner aufweisend:
Ausbilden einer Vielzahl von Elektromagneten, um die Vielzahl von Magnetfeldern zu erzeugen, wobei die Vielzahl von Elektromagneten, die durch die vorbestimmte Anzahl von Polen der Rotoranordnung ausgebildet werden, paarweise gruppiert werden, wobei jedem Paar von Polen der Rotoranordnung mindestens eine elektrische Drahtspule einer Vielzahl von elektrischen Drahtspulen zugeordnet ist und jedes Paar von Polen die Vielzahl von Elektromagneten ausbildet; und
wobei die ausgewählte Anzahl von Polen der Statoranordnung paarweise gruppiert ist, wobei eine magnetisch leitende Verbindung die Pole jedes Paares verbindet, wobei jedes Paar von Polen und die magnetisch leitende Verbindung der Statoranordnung mit jedem Elektromagneten der Rotoranordnung einen vollständigen Magnetkreis ausbilden.

## Revendications

1. Ensemble comprenant un frein électromagnétique sans contact (102), un arbre (116, 135) couplé à une surface de commande de vol (106) d'un aéronef et un actionneur électromagnétique (104), dans lequel :
le frein électromagnétique sans contact comprend un ensemble de stator annulaire (128) incluant un nombre prédéterminé de pôles (130) formés autour de l'ensemble de stator (128) ; et un ensemble de rotor (132) disposé dans l'ensemble de stator et comportant un nombre sélectionné de pôles (134) formés autour de l'ensemble de rotor ;
l'arbre (116) est agencé pour s'étendre à travers une partie centrale de l'ensemble de rotor et être raccordé fixe à l'ensemble de rotor ; et dans lequel :
une connexion électrique est à même d'appliquer de manière réglable de l'énergie électrique à au moins l'un de l'ensemble de stator et de l'ensemble de rotor pour amener une pluralité de champs magnétiques à se générer simultanément autour d'au moins l'un de l'ensemble de stator et de l'ensemble de rotor par les pôles d'au moins l'un de l'ensemble de stator et de l'ensemble de rotor en réponse à l'énergie électrique appliquée, dans lequel chacun de la pluralité de champs magnétiques amène les pôles de l'ensemble de stator et les pôles de l'ensemble de rotor à s'attirer magnétiquement l'un l'autre pour empêcher sensiblement l'ensemble de rotor et l'arbre de tourner ; dans lequel un moteur électrique (100) de l'ensemble d'actionneur électromagnétique (104) est configuré pour placer la surface de commande de vol (106) de l'aéronef dans une position sélectionnée au cours du vol en réponse au fonctionnement d'un mécanisme de commande de vol par un pilote,
dans lequel une tension et un courant électrique prédéterminés sont appliqués au frein électromagnétique sans contact (102) pour maintenir ou retenir la surface de commande de vol (106) dans la position sélectionnée jusqu'à ce que le pilote actionne encore le mécanisme de commande de vol.

2. Ensemble selon la revendication 1, comprenant en outre :
une pluralité de bobines de fil électrique (140) et le nombre prédéterminé de pôles de l'ensemble de stator étant formé en paires, au moins une bobine de fil électrique étant associée à chaque paire de pôles de l'ensemble de stator et chaque paire de pôles formant un électroaimant en réponse à l'énergie électrique appliquée à l'ensemble de stator ; et
dans lequel le nombre sélectionné de pôles de l'ensemble de rotor est groupé par paires, une liaison magnétoconductrice connectant les pôles de chaque paire, chaque paire de pôles et la liaison magnétoconductrice de l'ensemble de rotor formant un circuit magnétique complet avec chaque électroaimant de l'ensemble de stator.

3. Ensemble selon la revendication 1, comprenant en outre :
une pluralité de bobines de fil électrique et le nombre sélectionné de pôles de l'ensemble de rotor formé par paires, au moins une bobine de fil électrique étant associée à chaque paire de pôles de l'ensemble de rotor et chaque paire de pôles formant un électroaimant en réponse à l'énergie électrique appliquée à l'ensemble de rotor ; et
dans lequel le nombre prédéterminé de pôles de l'ensemble de stator est groupé par paires, une liaison magnétoconductrice connectant les pôles de chaque paire, chaque paire de pôles et la liaison magnétoconductrice de l'ensemble de stator formant un circuit magnétique complet avec chaque électroaimant de l'ensemble de rotor.

4. Ensemble selon la revendication 1, comprenant en outre :
une première pluralité de bobines de fil électrique et le nombre prédéterminé de pôles de l'ensemble de stator formé par paires, au moins une bobine de fil électrique de la première pluralité de bobines de fil électrique étant associée à chaque paire de pôles de l'ensemble de stator et chaque paire de pôles formant un électroaimant en réponse à l'énergie électrique appliquée à l'ensemble de stator ; et
une seconde pluralité de bobines de fil électrique et le nombre sélectionné de pôles de l'ensemble de rotor formé par paires, au moins une bobine de fil électrique de la seconde pluralité de bobines de fil électrique étant associée à chaque paire de pôles de l'ensemble de rotor et chaque paire de pôles formant un électroaimant en réponse à l'énergie électrique appliquée à l'ensemble de rotor.

5. Ensemble selon la revendication 1, dans lequel l'arbre du frein électromagnétique sans contact peut être couplé à un arbre de sortie (116) d'un moteur (700) pour permettre le freinage de l'arbre de sortie du moteur et empêcher l'arbre de sortie de tourner en sortie et dans lequel un arbre (135) du frein électromagnétique sans contact est couplé à la surface de commande de vol par l'arbre de sortie du moteur.

6. Ensemble selon la revendication 1, dans lequel le nombre prédéterminé de pôles de l'ensemble de stator et le nombre sélectionné de pôles de l'ensemble de rotor ont le même nombre de pôles.

7. Ensemble selon la revendication 1, comprenant en outre une pluralité de bobines de fil électrique, une bobine de fil électrique étant associée à chaque pôle d'au moins l'un de l'ensemble de stator et de l'ensemble de rotor.

8. Ensemble selon la revendication 7, dans lequel chacune des bobines de fil électrique comprend un nombre prédéterminé de spires pour générer une intensité de champ magnétique sélectionnée correspondant à une exigence de charge et de maintien du frein.

9. Ensemble selon la revendication 1, dans lequel l'arbre est lié à l'arbre de sortie de l'ensemble de moteur électrique pour empêcher sensiblement l'arbre de sortie (116) de tourner.

10. Ensemble selon la revendication 1, comprenant en outre un arbre (135) du frein sans contact formé d'un seul tenant avec l'arbre de sortie du moteur.

11. Ensemble selon la revendication 1, comprenant en outre un arbre (135) du frein sans contact couplé à l'arbre de sortie du moteur par un biellage mécanique.

12. Ensemble selon la revendication 1, dans lequel le moteur et le frein sans contact sont contenus dans le même boîtier.

13. Procédé de freinage d'un moteur (700), comprenant :
l'application d'énergie électrique à au moins l'un d'un ensemble de stator de forme annulaire (128) et d'un ensemble de rotor (132) disposé dans l'ensemble de stator, dans lequel l'ensemble de stator comprend un nombre prédéterminé de pôles (130) formés autour de l'ensemble de stator et l'ensemble de rotor inclut un nombre sélectionné de pôles (134) formés autour de l'ensemble de rotor ; dans lequel un arbre (116, 135) couplé à une surface de commande de vol (106) d'un aéronef est agencé pour s'étendre à travers une partie centrale de l'ensemble de rotor et être raccordé fixe à l'ensemble de rotor ; et
la génération simultanée d'une pluralité de champs magnétiques autour d'au moins l'un de l'ensemble de stator et de l'ensemble de rotor par les pôles d'au moins l'un de l'ensemble de stator et de l'ensemble de rotor en réponse à l'application de l'énergie électrique, dans lequel chacun de la pluralité de champs magnétiques amène les pôles de l'ensemble de stator et les pôles de l'ensemble de rotor à s'attirer magnétiquement l'un l'autre pour empêcher sensiblement l'ensemble de rotor de tourner, l'ensemble de rotor étant couplé mécaniquement à un arbre de sortie du moteur pour empêcher sensiblement l'arbre de sortie de tourner ; et
dans lequel un moteur électrique (100) de l'ensemble d'actionneur électromécanique (104) place la surface de commande de vol (106) de l'aéronef dans une position sélectionnée en cours de vol en réponse au fonctionnement d'un mécanisme de commande de vol par un pilote,
dans lequel une tension et un courant électrique prédéterminés sont appliqués au frein électromagnétique sans contact (102) pour maintenir ou retenir la surface de commande de vol (106) dans la position sélectionnée jusqu'à ce que le pilote actionne encore le mécanisme de commande de vol.

14. Procédé selon la revendication 13, dans lequel l'application de l'énergie électrique comprend l'application d'une tension et d'un courant prédéterminés pour développer un couple sensiblement maximal entre l'ensemble de stator et l'ensemble de rotor à zéro révolution par minute de l'ensemble de rotor.

15. Procédé selon la revendication 13, dans lequel l'application de l'énergie électrique comprend l'application d'un courant de freinage qui est d'environ 10 % à environ 20 % d'un courant d'entraînement de pic du moteur.

16. Procédé selon la revendication 13, comprenant en outre :
la formation d'une pluralité d'électroaimants pour générer la pluralité de champs magnétiques, la pluralité d'électroaimants étant formée par le nombre prédéterminé de pôles de l'ensemble de rotor qui sont groupés par paires, au moins une bobine de fil électrique d'une pluralité de bobines de fil électrique étant associée à chaque paire de pôles de l'ensemble de rotor et chaque paire de pôles formant l'un de la pluralité d'électroaimants ; et
dans lequel le nombre sélectionné de pôles de l'ensemble de stator est groupé par paires, une liaison magnétoconductrice connectant les pôles de chaque paire, chaque paire de pôles et la liaison magnétoconductrice de l'ensemble de stator formant un circuit magnétique complet avec chaque électroaimant de l'ensemble de rotor.
